# EUROPEAN PATENT APPLICATION

(11) **EP 4 597 770 A1**
(43) Date of publication of application: **06.08.2025**
(21) Application number: 23870976.0
(22) Date of filing: 27.09.2023
(51) Int. Cl.: H02G 11/02, H01R 13/72, B65H 75/34

(54) **TELESCOPIC DATA LINE**

(30) Priority: 29.09.2022 CN 202222618475 U
(71) Applicant: Shenzhen Baseus Technology Co., Ltd, Guangdong 518129 (CN)
(72) Inventor: LIN, Zhanxing, Dongguan, Guangdong 523000 (CN); ZHANG, Shengwei, Dongguan, Guangdong 523000 (CN); LI, Guangbin, Dongguan, Guangdong 523000 (CN)
(74) Representative: Herrero & Asociados, S.L.
(86) International application number: PCT/CN2023/122290
(87) International publication number: WO 2024/067751

(57) **Abstract**

The present invention relates to a telescopic data line. The telescopic data line comprises a housing (10), a cable (11) and a winding assembly (12). The housing (10) defines an accommodating cavity. The winding assembly (12) is arranged in the accommodating cavity. The winding assembly (12) comprises a winding disc (120) and a rebound assembly (121). The winding disc (120) comprises a baffle (1203) and a fixing structure (1200) arranged on one side of the baffle. The end of the fixing structure (1200) distant from the baffle directly abuts against an inner wall of the housing (10). The cable (11) is exposed outside of the housing (10) after winding around the fixing structure (1200). The rebound assembly (121) is arranged in the fixing structure (1200) and cooperates with the fixing structure (1200) to control the winding disc (120) to rotate relative to the housing (10). According to the present invention, the problems in the prior art of a telescopic adjustable charger having a complex structure and the charger having a small internal space utilization rate are solved.

## Description

### TECHNICAL FIELD

The present application relates to the technical field of data cables, in particular to a retractable data cable.

### BACKGROUND

At present, there are a few charging cables on the market that can be adjusted in a retractable manner. However, a structure of an adjusting device of a traditional retractable charger is complex, and both sides of a cable need to be limited via two partition plates. In addition, in order to allow the cable to be retracted into a housing, it is also necessary to specially add a position in which a coil spring is arranged. In this way, an occupied space of the device is further increased, and in addition a space utilization rate of the adjusting device is reduced, so that an overall volume of the housing is large, which is inconvenient for its placement and reception.

### SUMMARY

In order to solve the technical problem of a complex structure and a small internal utilization rate of a traditional retractable charger, the present application provides a retractable data cable.

The present application provides a retractable data cable to solve the technical problem. The retractable data cable includes a housing, a cable and a cable winding assembly, the housing defines an accommodation cavity, and the cable winding assembly is disposed in the accommodation cavity. The cable winding assembly includes a cable winding reel and a rebound assembly. The cable winding reel includes a baffle and a fixing structure disposed on a side of the baffle. An end of the fixing structure away from the baffle directly abuts against an inner wall of the housing. The cable is wound around the fixing structure and exposed from the housing. The rebound assembly is disposed within the fixing structure and cooperates with the fixing structure to control a rotation of the cable winding reel relative to the housing.

Preferably, the retractable data cable further includes a movable assembly, and the movable assembly is disposed on a side of the baffle away from the fixing structure. The movable assembly includes a driving assembly cooperating with the baffle and an auxiliary member fixedly connected to the housing. The auxiliary member is disposed on a driving side and cooperates with the driving assembly. The rotation of the cable winding assembly drives the driving assembly to move and causes the auxiliary member to elastically deform, to provide a pre-tightening force for the driving assembly to swing toward or away from a side of the auxiliary member.

Preferably, the driving assembly includes a motion gear, a limit gear and a swing return member, and the motion gear is fixedly connected to the baffle. The swing return member is disposed between the motion gear, the limit gear and the auxiliary member. The swing return member includes a first cooperating element cooperating with the limit gear, a second cooperating element cooperating with the motion gear, and a third cooperating element cooperating with the auxiliary member, to provide a pre-tightening force for the swing return member to swing toward or away from the side of the auxiliary member.

Preferably, the auxiliary member includes a fixed part and an elastic part, the fixed part is connected to the elastic part, an end of the elastic part away from the fixed part cooperates with the third cooperating element, and the fixed part is connected to the housing.

Preferably, the first cooperating element includes a pushing portion and a stopping portion, and each of the pushing portion and the stopping portion is provided at a respective one of two ends of the swing return member and cooperates with the limit gear.

Preferably, the motion gear is provided with at least six recesses, and the second cooperating element is provided with a protrusion cooperating with the at least six recesses.

Preferably, an annular partition wall is disposed on a side of the baffle close to the movable assembly, the annular partition wall and the housing together define a partitioned cavity, and the movable assembly is disposed in the partitioned cavity.

Preferably, the housing is provided with a first limit shaft and a second limit shaft, the first limit shaft is rotatably connected to the limit gear, and the second limit shaft is rotatably connected to the swing return member.

Preferably, the fixing structure includes a first fixing block and a second fixing block disposed within the first fixing block, the cable is snap-fitted between the first fixing block and the second fixing block, and two ends of the cable pass through the first fixing block and are exposed from the housing.

Preferably, the rebound assembly includes a coil spring, the housing is provided with a central shaft, one of two ends of the coil spring is connected to the central shaft, and another one of the two ends of the coil spring is connected to the second fixing block.

Preferably, the limit gear is provided with a limit groove and a return groove spaced apart from each other, the limit groove cooperates with the stopping portion, and the return groove cooperates with the pushing portion. The stopping portion cooperates with the limit groove to allow a limitation of the motion gear. The stopping portion cooperates with the return groove to release the limitation of the motion gear.

Preferably, the first fixing block is annular, the first fixing block is provided with two openings opposite to each other along a direction perpendicular to a rotation axis of the baffle, and each of the two ends of the cable passes through the first fixing block via a respective one of the two openings.

Preferably, the fixed part is further provided with at least one blind hole, and the housing is further provided with a fixing member cooperating with the blind hole to fix the fixed part.

Preferably, an end of the cable is defined as an output end, another end of the cable is defined as an input end, and the output end and/or the input end include at least one data cable interface.

Preferably, the data cable interface includes one or more of mini, micro, Lightning, Type-C and USB-A, and the data cable interface is a magnetic suction interface or a mechanical plug-in interface.

Compared with the related art, the retractable data cable provided by the present application provides the following advantages.
1. An embodiment of the present application provides a retractable data cable. The retractable data cable includes a housing, a cable and a cable winding assembly, the housing defines an accommodation cavity, and the cable winding assembly is disposed in the accommodation cavity. The cable winding assembly includes a cable winding reel and a rebound assembly. The cable winding reel includes a baffle and a fixing structure disposed on a side of the baffle. An end of the fixing structure away from the baffle directly abuts against an inner wall of the housing. The cable is wound around the fixing structure and exposed from the housing. The rebound assembly is disposed within the fixing structure and cooperates with the fixing structure to control a rotation of the cable winding reel relative to the housing. The cable can be wound around the outer periphery of the fixing structure, and the rebound assembly allows the cable wound around the outer periphery of the fixing structure to be freely extended or retracted, to urge the cable to extend by any length. By disposing the rebound assembly within the fixing structure, the rebound assembly is located inside the cable winding reel, thereby eliminating the volume occupied by the rebound assembly of the traditional retractable data cable. In addition, two ends of the fixing structure are respectively closed by the baffle and the housing to allow the cable to be limited, which can omit one of the partition plates in the traditional design, helps to reduce the space occupied by the device and improves the internal space utilization rate of the device.
2. In the retractable data cable provided by the embodiment of the present application, through the movable assembly, when the cable wound around the outer periphery of the fixing structure is pulled out by any length, the movable assembly can position the cable. When the user wants to extend the cable, the cable is pulled to drive the fixing structure to rotate, to allow the cable to be pulled out of the fixing structure. When the user pulls out the cable by an appropriate length, the cable can be released directly by the user, and the driving assembly and the auxiliary member cooperate with each other to maintain the length of the cable for easy use. Therefore, the design of the cooperation of the movable assembly and the cable winding assembly simplifies the structure of the adjusting device of the retractable charger, and effectively improves the practicability of the retractable data cable.
3. In the retractable data cable provided by the embodiment of the present application, through the elastic deformation of the auxiliary member, a pre-tightening force is applied to the swing return member through the third cooperating element, to cause the swing return member to maintain a tendency to swing to one side. When the cable is pulled to drive the fixing structure and the motion gear to rotate, the motion gear will drive the swing return member to move through the second cooperating element, to allow the swing return member to drive the limit gear to rotate through the first cooperating element. However, due to the presence of the pre-tightening force, the swing return member will rebound when it moves by a certain distance, to allow the swing return member to contact and cooperate with the groove of the limit gear again. The functions of limiting and retracting can be achieved through the cooperation of the swing return member and different grooves of the limit gear. Therefore, the design that the swing return member rebounds through the pre-tightening force provided by the auxiliary member makes the structure of the retractable data cable simpler.
4. In the retractable data cable provided by the embodiment of the present application, the elastic part cooperates with the third cooperating element to fix the length of the cable after arbitrary extension, and the fixing member arranged on the housing cooperates with the fixed part to fix the auxiliary member to prevent a displacement of the auxiliary member during the extension of the cable.
5. In the retractable data cable provided by the embodiment of the present application, the design of the pushing portion and the stopping portion can urge the swing return member to drive the limit gear during the swing of the swing return member and to cooperate with the limit gear, thereby achieving the stopping of the limit gear to the swing return member in different states. In this way, the structure is simple and the volume is small, and such a design makes the data cable lighter as a whole.

### BRIEF DESCRIPTION OF THE DRAWINGS

FIG. 1 is a schematic exploded diagram of a retractable data cable provided by the present application.
FIG. 2 is a partial schematic diagram of a cable winding assembly provided by the present application.
FIG. 3 is a schematic diagram illustrating a cooperation of a movable assembly and a cable winding assembly provided by the present application.
FIG. 4 is a schematic diagram of a swing return member provided by the present application.
FIG. 5 is a schematic diagram of an auxiliary member provided by the present application.
FIG. 6 is a schematic diagram illustrating a cooperation of an auxiliary member and a swing return member provided by the present application.
FIG. 7 is a schematic diagram of a limit gear provided by the present application.
FIG. 8 is a schematic diagram of a motion gear provided by the present application.
FIG. 9 is a schematic diagram of a rebound assembly provided by the present application.
[FIG. 10 is a partial schematic diagram of a housing according to the present application.

List of reference symbols:
1. retractable data cable;
10. housing; 11. cable; 12. cable winding assembly; 13. movable assembly;
100. first limit shaft; 101. second limit shaft; 102. central shaft; 103. fixing member; 111. output end; 112. input end; 113. data cable interface; 120. cable winding reel; 121. rebound assembly; 122. annular partition wall; 130. driving assembly; 131. auxiliary member;
1200. fixing structure; 1203. baffle; 1210. coil spring; 1300. swing return member; 1301. limit gear; 1302. motion gear; 1310. fixed part; 1311. elastic part;
12001. first fixing block; 12002. second fixing block; 13000. first cooperating element; 13001. second cooperating element; 13002. third cooperating element; 13010. limit groove; 13011. return groove; 13020. recess; 13100. blind hole;
120010. opening; 130001. pushing portion; 130002. stopping portion.

### DETAILED DESCRIPTION

In order to make the purposes, the technical solutions and the advantages of the present application to be understood more clearly, the present application will be further described in detail below with reference to the accompanying drawings and embodiments. It is to be understood that specific embodiments described herein are merely for explaining the present application and are not intended to limit the present application.

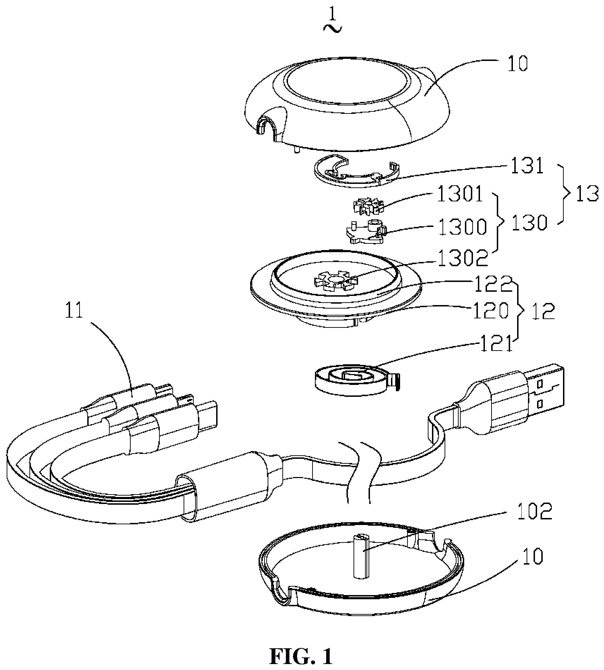

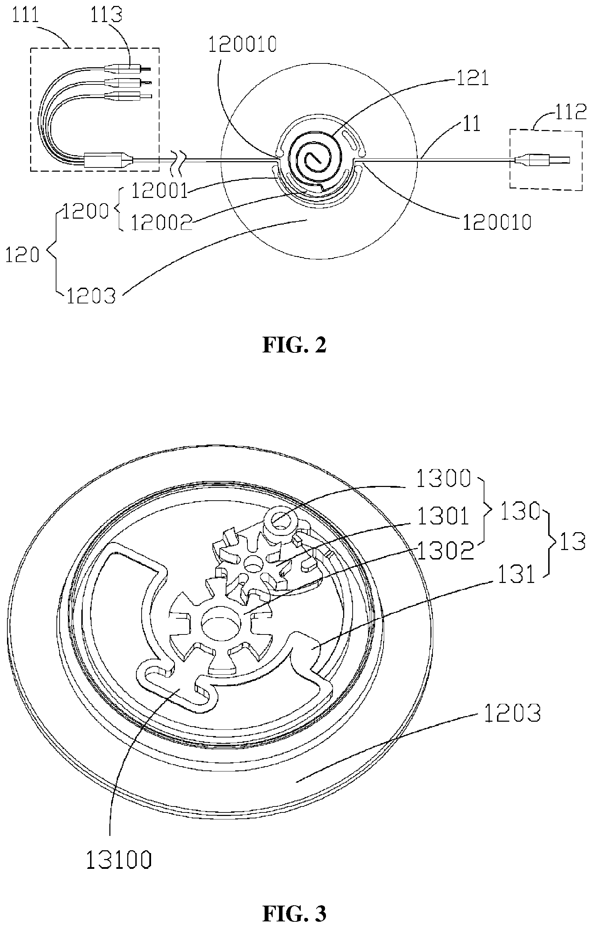

Referring to FIG. 1 and FIG. 2, a first embodiment of the present application provides a retractable data cable 1, and the retractable data cable 1 includes a housing 10 defining an accommodation cavity, a cable 11, and a cable winding assembly 12 disposed in the accommodation cavity. The cable winding assembly 12 includes a cable winding reel 120 and a rebound assembly 121. The cable winding reel 120 includes a baffle 1203 and a fixing structure 1200 disposed on a side of the baffle 1203. An end of the fixing structure 1200 away from the baffle 1203 directly abuts against an inner wall of the housing 10. The cable 11 is wound around the fixing structure 1200 and exposed from the housing 10. The rebound assembly 121 is disposed within the fixing structure 1200 and cooperates with the fixing structure 1200 to control a rotation of the cable winding reel 120 relative to the housing 10. It can be understood that through the cable winding assembly 12, the cable 11 can be pulled out of the cable winding assembly 12, or the excess cable 11 can be retracted into the cable winding assembly 12, to realize the free extension and retraction of the data cable. The fixing structure 1200 is configured to fix the cable 11, to allow the cable 11 to be wound around an outer periphery of the fixing structure 1200 during the extension and retraction of the cable 11. The rebound assembly 121 is disposed within the fixing structure 1200, the cable 11 can be wound around the outer periphery of the fixing structure 1200 through the rebound assembly 121, and the end of the fixing structure 1200 away from the baffle 1203 abuts against the inner wall of the housing 10. That is, the cable 11 is disposed between the baffle 1203 and the inner wall of the housing 10. When the cable 11 is wound around the fixing structure 1200, the baffle 1203 and the housing 10 can limit a winding section of the cable 11 to prevent the cable 11 from being disengaged from the cable winding reel 120.

Further, the fixing structure 1200 includes a first fixing block 12001 and a second fixing block 12002 disposed within the first fixing block 12001, the cable 11 is snap-fitted between the first fixing block 12001 and the second fixing block 12002, and two ends of the cable 11 pass through the first fixing block 12001 and are exposed from the housing 10. It can be understood that a section of the cable 11 is snap-fitted between the first fixing block 12001 and the second fixing block 12002. Optionally, the first fixing block 12001 is provided as an annular structure, which is convenient for the cable 11 to be wound around an outer periphery of the first fixing block 12001 when it is retracted, and the second fixing block 12002 is provided as an arc-shaped structure, and the first fixing block 12001 and the second fixing block 12002 are disposed coaxially. In addition, the first fixing block 12001 is provided with two openings 120010, and the housing 10 is also provided with two through holes. Each of the two ends of the cable 11 passes through a respective one of the two openings 120010 and a respective one of the two through holes successively and is exposed. It should be noted that when the cable 11 needs to be shortened, the cable winding reel 120 rotates clockwise/counterclockwise, and two sections of the cable 11 passing through the first fixing block 12001 are respectively wound clockwise/counterclockwise around the outer periphery of the first fixing block 12001. When the cable 11 needs to be extended, the cable winding reel 120 rotates counterclockwise/clockwise, and each of the two sections of the cable 11 wound around the outer periphery of the first fixing block 12001 extends out of the housing 10 through a respective one of the two through holes. It can be understood that in order to make the thickness of the sections of the cable 11 wound around the outer periphery of the first fixing block 12001 as uniform as possible, the two openings 120010 may be disposed on the first fixing block 12001 opposite to each other along a direction perpendicular to a rotation axis of the baffle 1203. That is, the two openings 120010 and an axis center of the first fixing block 12001 are located on the same straight line.

It should be noted that, in the traditional design scheme, two ends of a shaft around which the cable 11 is wound are closed by partition plates, which occupies more space; while in the present application, two ends of the first fixing block 12001 are closed by the baffle 1203 and the housing 10 respectively, and the cable 11 is restricted, which can omit one of the partition plates in the traditional design, and help to reduce the space occupied by the device.

Further, referring to FIG. 1, an annular partition wall 122 is disposed on a side of the baffle 1203 close to a movable assembly 13, the annular partition wall 122 and the housing 10 together define a partitioned cavity, and the movable assembly 13 is disposed in the partitioned cavity.

Optionally, a part of the housing 10 may be provided as a transparent area. In this way, the user can conveniently observe the internal structure of the housing 10 and the sense of design is improved.

It can be understood that the movable assembly 13 is disposed in the partitioned cavity, and under the action of the annular partition wall 122 and the housing 10, the interference of external factors is minimized, the cable 11 is prevented from not being smoothly extended or retracted due to the entry of a large amount of dust into the movable assembly 13, and the service life of the device is prolonged.

The rebound assembly 121 is disposed within the second fixing block 12002, and under the action of an external force, the cable 11 extends, the cable winding reel 120 rotates, and the rebound assembly 121 generates elastic potential energy. When the cable 11 needs to be shortened, under the action of the rebound assembly 121, the cable winding reel 120 rotates in the opposite direction, to allow the cable 11 to be wound around the outer periphery of the first fixing block 12001. The rebound assembly 121 is disposed within the second fixing block 12002. In this way, the position where the rebound assembly 121 originally needs to be specially placed is omitted, and the volume of the cable winding assembly 12 as a whole is reduced.

Further, referring to FIG. 1 and FIG. 3, the retractable data cable 1 provided by the present embodiment further includes a movable assembly 13, and the movable assembly 13 is disposed on a side of the baffle 1203 away from the fixing structure 1200. The movable assembly 13 includes a driving assembly 130 cooperating with the baffle 1203 and an auxiliary member 131 fixedly connected to the housing 10. The auxiliary member 131 is disposed on a driving side and cooperates with the driving assembly 130. The rotation of the cable winding assembly 12 drives the driving assembly 130 to move and thus causes the auxiliary member 131 to elastically deform, to provide a pre-tightening force for the driving assembly 130 to swing toward or away from a side of the auxiliary member 131.

It can be understood that the cable 11 wound around the first fixing block 12001 can be freely extended or retracted through the cable winding assembly 12 disposed in the retractable data cable 1. By providing the movable assembly 13, the movable assembly 13 can position the cable 11 when the cable 11 wound around the cable winding reel 120 is extended by any length. When the user extends the cable 11 by a suitable length, the user can directly release the cable 11, and the cooperation of the cable winding reel 120 and the driving assembly 130 in the movable assembly 13 allows the cable 11 to maintain the length thereof for use. It can be seen that the design of the cooperation of the movable assembly 13 and the cable winding reel 120 simplifies the structure of the adjusting device of the retractable charger, and effectively improves the practicability of the retractable data cable 1.

Further, the driving assembly 130 includes a motion gear 1302, a limit gear 1301, and a swing return member 1300. The motion gear 1302 is fixedly connected to the baffle 1203. The swing return member 1300 is disposed between the motion gear 1302, the limit gear 1301 and the auxiliary member 131.

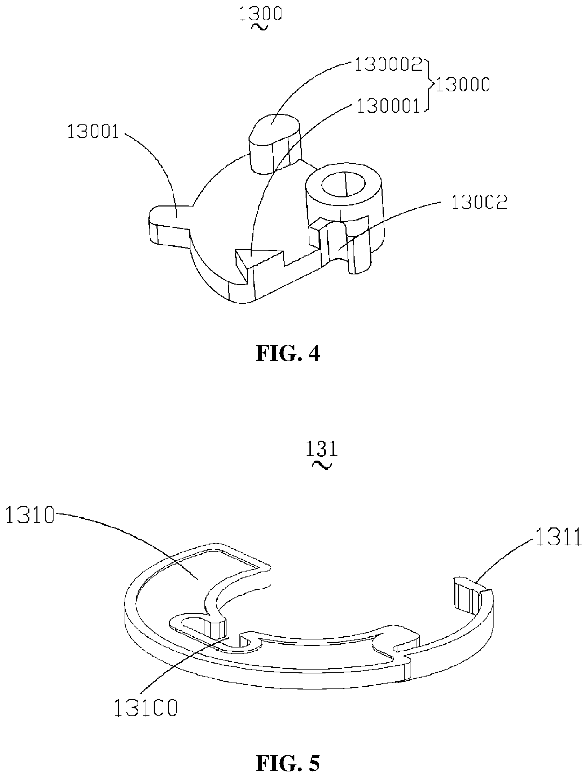

Further, referring to FIG. 4 to FIG. 6, the swing return member 1300 includes a first cooperating element 13000 cooperating with the limit gear 1301, a second cooperating element 13001 cooperating with the motion gear 1302, and a third cooperating element 13002 cooperating with the auxiliary member 131, to provide a pre-tightening force for the swing return member 1300 to swing toward or away from a side of the auxiliary member 131.

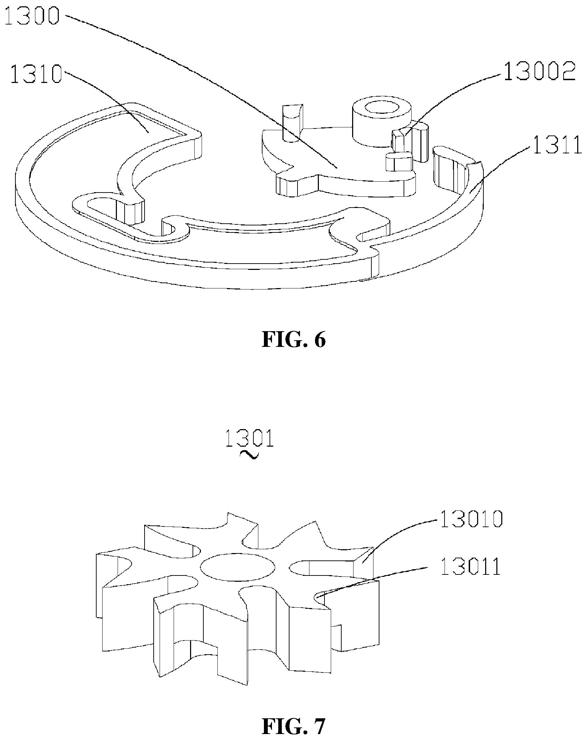

Further, referring to FIG. 5 and FIG. 6, the auxiliary member 131 includes a fixed part 1310 and an elastic part 1311, the fixed part 1310 is connected to the elastic part 1311, and an end of the elastic part 1311 away from the fixed part 1310 cooperates with the third cooperating element 13002. It can be understood that the fixed part 1310 can be connected to the housing 10 to allow the auxiliary member 131 to be fixed, to prevent a displacement of the auxiliary member 131. An end of the elastic part 1311 cooperating with the third cooperating element 13002 can move within a certain range to provide a stable pre-tightening force for the swing return member 1300. It can be understood that the magnitude of the pre-tightening force is relevant to the length of the elastic part 1311. Therefore, the magnitude of the pre-tightening force can be adjusted by adjusting the length of the elastic part 1311 without changing the material used.

Further, referring to FIG. 4 and FIG. 7, the limit gear 1301 is provided with a limit groove 13010 and a return groove 13011 spaced apart from each other, and the first cooperating element 13000 includes a pushing portion 130001 and a stopping portion 130002. Each of the pushing portion 130001 and the stopping portion 130002 is provided at a respective one of two ends of the swing return member 1300 and cooperates with the limit gear 1301.

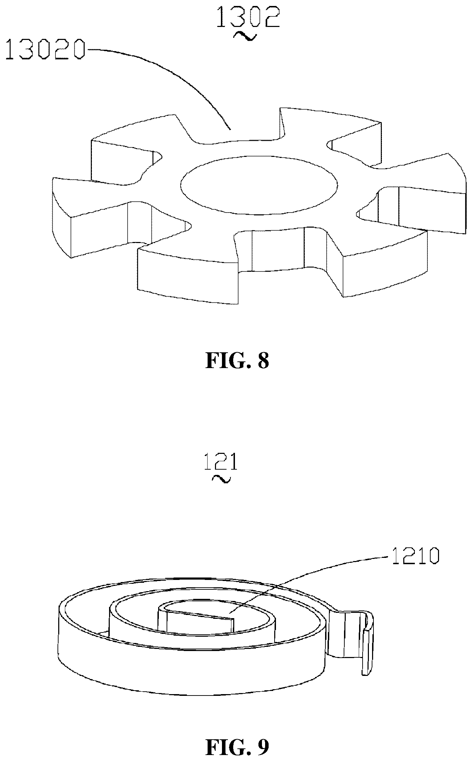

Further, referring to FIG. 4 and FIG. 8, the motion gear 1302 is provided with at least six recesses 13020, and the second cooperating element 13001 is provided with a protrusion cooperating with the recesses 13020. It should be explained that each of the recesses 13020 in the present embodiment can be understood as a gear slot of the motion gear 1302, the protrusion provided on the second cooperating element 13001 cooperates with the recesses 13020, and at least six recesses 13020 are provided, which can ensure that when the motion gear 1302 rotates, the swing return member 1300 will not be in a state of not cooperating with the recesses 13020 for a long time, thereby avoiding the situation that the cable 11 cannot be stopped in time. In addition, seven or eight recesses 13020 or the like may be provided, and the recesses 13020 are evenly distributed on the motion gear 1302. The more recesses 13020 are, when the user extends the cable 11, the cable 11 can be stopped in time, and the cable 11 can be extended out by an appropriate length as needed.

It should be noted that when the cable 11 is pulled by the user to extend, the motion gear 1302 drives the swing return member 1300 to swing through the second cooperating element 13001, to urge the pushing portion 130001 to come into contact with the limit gear 1301 and push the limit gear 1301 to rotate. When the extension ceases, the cable winding reel 120 rotates back by a short distance under the action of the rebound assembly 121. At this time, the stopping portion 130002 of the swing return member 1300 cooperates with the limit groove 13010 of the limit gear 1301 to fix the swing return member 1300 at the current position, thereby fixing the motion gear 1302 cooperating with the second cooperating element 13001 at the current position, and thus achieving the fixation of the cable winding reel 120 and the cable 11. When the cable 11 needs to be retracted, the cable 11 is pulled to extend by an appropriate distance, and the swing return member 1300 is driven to swing by a certain distance through the cooperation of the recesses 13020 provided on the motion gear 1302 and the protrusion of the second cooperating element, to urge the pushing portion 130001 to push the limit gear 1301 to rotate, to allow the return groove 13011 to rotate to a predetermined position. When the cable is released by the user, since the motion gear 1302 rotates back and there is the pre-tightening force, the swing return member 1300 swings back, and the stopping portion 130002 cooperates with the return groove 13011. At this time, the second cooperating element 13001 no longer cooperates with the recesses 13020 of the motion gear 1302, and the motion gear 1302 drives the cable winding reel 120 to rotate back, to complete the retraction of the cable 11.

Further, referring to FIG. 1, FIG. 2 and FIG. 9, the rebound assembly 121 includes a coil spring 1210, and the housing 10 is provided with a central shaft 102. One of two ends of the coil spring 1210 is connected to the central shaft 102, and another one of the two ends of the coil spring 1210 is connected to the second fixing block 12002. It should be noted that the rebound assembly 121 in the present embodiment adopts the coil spring 1210, which has a simple structure and is convenient for installation and replacement. The end of the coil spring 1210 connected to the second fixing block 12002 is a free end, and the end of the coil spring 1210 connected to the central shaft 102 is a fixed end. When the cable 11 is pulled by the user to extend, the cable winding reel 120 rotates to drive the free end of the coil spring 1210 to rotate, and the coil spring 1210 is elastically deformed. When the cable 11 needs to be shortened, the cable winding reel 120 is driven to rotate in the opposite direction under the action of the coil spring 1210, to allow the cable 11 to be wound around the outer periphery of the first fixing block 12001.

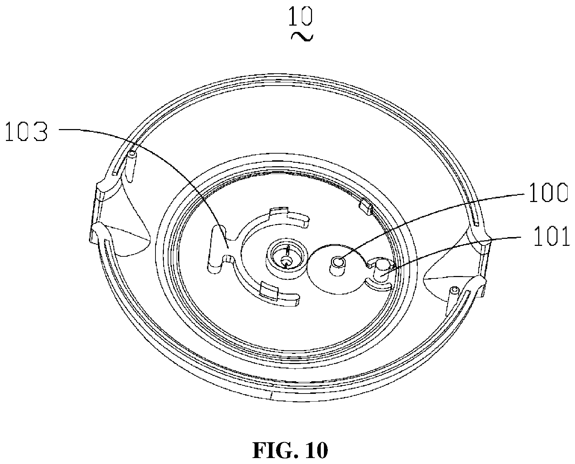

Further, referring to FIG. 3 and FIG. 10, the housing 10 is provided with a fixing member 103 configured to fix the fixed part 1310, the housing 10 is further provided with a first limit shaft 100 and a second limit shaft 101, the first limit shaft 100 is rotatably connected to the limit gear 1301, and the second limit shaft 101 is rotatably connected to the swing return member 1300.

It should be noted that the auxiliary member 131 is connected to the housing 10 through the fixing member 103, and the fixing member 103 is configured to limit the fixed part 1310. The fixed part 1310 of the auxiliary member 131 may be provided with at least one blind hole 13100, and the shape of the blind hole 13100 may be a regular shape such as a circular hole, a square hole, or may be a profile hole with an irregular shape. The fixing member 103 cooperates with the blind hole 13100 of the fixed part 1310 or corresponds to the shape of the fixed part 1310 itself to prevent the displacement of the fixed part 1310, to allow the auxiliary member 131 to always cooperate with the driving assembly 130. In addition, in case that the auxiliary member 131 is damaged, the cooperating manner of the fixing member 103 and the auxiliary member 131 is convenient for disassembling and replacement.

Similarly, each of an axial center of the limit gear 1301 and the swing return member 1300 may be provided with a through hole, the first limit shaft 100 is rotatably connected to the limit gear 1301, and the second limit shaft 101 is rotatably connected to the swing return member 1300, to limit the limit gear 1301 and the swing return member, to prevent the displacement of the limit gear 1301 and the swing return member 1300.

Further, referring to FIG. 2, an end of the cable 11 is defined as an output end 111, another end of the cable 11 is defined as an input end 112, and the output end 111 and/or the input end 112 include at least one data cable interface 113.

It should be noted that the retractable data cable 1 provided in the present embodiment may perform one-to-one, one-to-multiple, or multiple-to-multiple charging or data transmission. Specifically, there may be one or multiple data cable interfaces 113 located at the input end 112, and there may be one or multiple data cable interfaces 113 located at the output end 111. The present embodiment is not specifically limited thereto, and is beneficial to expanding the scope of use of the retractable data cable 1 and enhancing the practicality of the present application.

Further, the data cable interface 113 includes one or more of mini, micro, Lightning, Type-C and USB-A, and the data cable interface 113 is a magnetic suction interface or a mechanical plug-in interface.

Exemplarily, each of the data cable interfaces 113 located at the input end 112 and the output end 111 may be a Type-C interface (Type-C to Type-C). The data cable interface 113 located at the input end 112 is a USB-A interface, and the data cable interface 113 located at the output end 111 is a Type-C interface (USB-A to Type-C). It can be understood that the retractable data cable 1 provided in the present embodiment can achieve Type-C to Type-C, USB-A to Type-C and the like for charging or data transmission. The data cable interface 113 is a magnetic suction interface or a mechanical plug-in interface, which is beneficial to making the retractable data cable 1 of the present application suitable for different usage situations and enhancing the adaptability of the retractable data cable 1.

Further, the motion gear 1302 and the baffle 1203 are jointly disposed around the central shaft 102, and it can be understood that in case that the first fixing block 12001 is an annular structure, an axial center of the central shaft 102 is also the axial center of the first fixing block 12001. When the cable 11 is pulled by the user to extend or is shortened, the cable winding reel 120 rotates about the central shaft 102. The motion gear 1302 is disposed around the central shaft 102 to allow the motion gear 1302 to be limited, that is, the motion gear 1302 can rotate about the central shaft 102 without displacement.

Exemplarily, an initial state of the retractable data cable 1 is a retracted state. When the data cable needs to be used, the cable 11 is pulled by the user to extend, and the extension of the cable 11 drives the cable winding reel 120 to rotate about the central shaft 102. On the one hand, the coil spring 1210 fixedly connected to the second fixing block 12002 rotates synchronously with the rotation of the cable winding reel 120, and the coil spring 1210 generates elastic potential energy. On the other hand, the motion gear 1302 fixedly connected to the cable winding reel 120 rotates synchronously with the rotation of the cable winding reel 120, to drive the swing return member 1300 cooperating with the motion gear 1302 to rotate to one side. When the swing return member 1300 rotates, the pushing portion 130001 pushes the limit gear 1301 to rotate, and pushes the limit groove 13010 to a preset position. When the swing return member 1300 swings by a certain distance, the second cooperating element 13001 provided on the swing return member 1300 slides out of the gear slot of the motion gear 1302. At this time, the elastic part 1311 of the auxiliary member 131 cooperating with the swing return member 1300 is elastically deformed to provide a pre-tightening force for the swing return member 1300, to allow the swing return member 1300 to rebound in another direction and cooperate with the next recess 13020 of the motion gear 1302. After the cable 11 is extended by an appropriate length, an elastic force of the coil spring 1210 causes the cable winding reel 120 to rotate back and drives the motion gear 1302 to rotate back. Since the motion gear 1302 rotates back and there is the pre-tightening force, the stopping portion 130002 provided on the swing return member 1300 cooperates with the limit groove 13010 of the limit gear 1301 to fix the swing return member 1300 at the current position, that is, to fix the motion gear 1302 cooperating with the second cooperating element 13001 provided on the swing return member 1300 at the current position, thereby achieving the stopping of the cable winding reel 120 and the cable 11.

When the cable 11 needs to be retracted, the cable 11 is pulled by the user to extend by a short distance, to allow the motion gear 1302 to drive the swing return member 1300 to swing by a short distance, to urge the pushing portion 130001 to push the limit gear 1301 and to push the return groove 13011 to a preset position. When the cable is released by the user, the swing return member 1300 swings back, to allow the stopping portion 130002 to cooperate with the return groove 13011, and allow the swing return member 1300 to be fixed at the current position. At this time, the second cooperating element 13001 provided on the swing return member 1300 no longer cooperates with the motion gear 1302, and the motion gear 1302 is not prevented from rotating back. The cable winding reel 120 rotates back under the action of the elastic force of the coil spring 1210 to complete the retraction of the cable 11.

The above are only preferred embodiments of the present application, and are not intended to limit the present application. Any modifications, equivalents, substitutions and improvements made within the principles of the present application should be included within the scope of protection of the present application.

## Claims

1. A retractable data cable, comprising a housing, a cable and a cable winding assembly, the housing defining an accommodation cavity, the cable winding assembly being disposed in the accommodation cavity;
the cable winding assembly comprises a cable winding reel and a rebound assembly, the cable winding reel comprising a baffle and a fixing structure disposed on a side of the baffle, an end of the fixing structure away from the baffle directly abutting against an inner wall of the housing, the cable being wound around the fixing structure and exposed from the housing, the rebound assembly being disposed within the fixing structure and cooperating with the fixing structure to control a rotation of the cable winding reel relative to the housing.

2. The retractable data cable according to claim 1, wherein the retractable data cable further comprises a movable assembly disposed on a side of the baffle away from the fixing structure;
the movable assembly comprises a driving assembly cooperating with the baffle and an auxiliary member fixedly connected to the housing, the auxiliary member being disposed on a driving side and cooperating with the driving assembly, the rotation of the cable winding assembly driving the driving assembly to move and causing the auxiliary member to elastically deform, to provide a pre-tightening force for the driving assembly to swing toward or away from a side of the auxiliary member.

3. The retractable data cable according to claim 2, wherein the driving assembly comprises a motion gear, a limit gear and a swing return member, the motion gear being fixedly connected to the baffle;
the swing return member is disposed between the motion gear, the limit gear and the auxiliary member, the swing return member comprising a first cooperating element cooperating with the limit gear, a second cooperating element cooperating with the motion gear, and a third cooperating element cooperating with the auxiliary member, to provide a pre-tightening force for the swing return member to swing toward or away from the side of the auxiliary member.

4. The retractable data cable according to claim 3, wherein the auxiliary member comprises a fixed part and an elastic part, the fixed part being connected to the elastic part, an end of the elastic part away from the fixed part cooperating with the third cooperating element, the fixed part being connected to the housing.

5. The retractable data cable according to claim 3, wherein the first cooperating element comprises a pushing portion and a stopping portion, each of the pushing portion and the stopping portion being provided at a respective one of two ends of the swing return member and cooperating with the limit gear.

6. The retractable data cable according to claim 3, wherein the motion gear is provided with at least six recesses, and the second cooperating element is provided with a protrusion cooperating with the at least six recesses.

7. The retractable data cable according to claim 2, wherein an annular partition wall is disposed on a side of the baffle close to the movable assembly, the annular partition wall and the housing together defining a partitioned cavity, the movable assembly being disposed in the partitioned cavity.

8. The retractable data cable according to claim 3, wherein the housing is provided with a first limit shaft and a second limit shaft, the first limit shaft being rotatably connected to the limit gear, the second limit shaft being rotatably connected to the swing return member.

9. The retractable data cable according to claim 1, wherein the fixing structure comprises a first fixing block and a second fixing block disposed within the first fixing block, the cable being snap-fitted between the first fixing block and the second fixing block, and two ends of the cable passing through the first fixing block and being exposed from the housing.

10. The retractable data cable according to claim 9, wherein the rebound assembly comprises a coil spring, the housing being provided with a central shaft, one of two ends of the coil spring being connected to the central shaft, and another one of the two ends of the coil spring being connected to the second fixing block.

11. The retractable data cable according to claim 5, wherein the limit gear is provided with a limit groove and a return groove spaced apart from each other, the limit groove cooperating with the stopping portion, the return groove cooperating with the pushing portion;
the stopping portion cooperates with the limit groove to allow a limitation of the motion gear;
the stopping portion cooperates with the return groove to release the limitation of the motion gear.

12. The retractable data cable according to claim 9, wherein the first fixing block is annular, the first fixing block being provided with two openings opposite to each other along a direction perpendicular to a rotation axis of the baffle, each of the two ends of the cable passing through the first fixing block via a respective one of the two openings.

13. The retractable data cable according to claim 4, wherein the fixed part is further provided with at least one blind hole, and the housing is further provided with a fixing member cooperating with the blind hole to fix the fixed part.

14. The retractable data cable according to claim 1, wherein one end of the cable is defined as an output end, and another end of the cable is defined as an input end, and the output end and/or the input end comprises at least one data cable interface.

15. The retractable data cable according to claim 14, wherein the data cable interface comprises one or more of mini, micro, Lightning, Type-C and USB-A, and the data cable interface is a magnetic suction interface or a mechanical plug-in interface.
